# EUROPEAN PATENT APPLICATION

(11) **EP 4 371 620 A1**
(43) Date of publication of application: **22.05.2024**
(21) Application number: 23206278.6
(22) Date of filing: 26.10.2023
(51) Int. Cl.: A62C 3/16, A62C 37/40, A62C 37/44, A62C 99/00, H01M 10/52

(54) **EXTINGUISHING SYSTEM AND A FIRE PRE-WARNING CONTROL METHOD FOR AN ENERGY STORAGE CONTAINER**

(30) Priority: 21.11.2022 CN 202211463245
(71) Applicant: Cornex New Energy Co., Ltd., Xiaogan Hubei 432099 (CN)
(72) Inventor: PENG, Jianhua, Xiaogan, Hubei, 432099 (CN); WU, Xibin, Xiaogan, Hubei, 432099 (CN); BU, Xiangnan, Xiaogan, Hubei, 432099 (CN); JIANG, Yuanfu, Xiaogan, Hubei, 432099 (CN); ZHOU, Leijun, Xiaogan, Hubei, 432099 (CN)
(74) Representative: Ipey

(57) **Abstract**

The present disclosure provides a fire extinguishing system for an energy storage container, comprising: a fire control main engine; a cluster-level and cabin-level perfluorohexanone fire subsystem for implementing the cabin-level perfluorohexanone fire prevention; and a PACK-level water fire subsystem for implementing the water fire prevention in a battery box. According to the fire extinguishing system for an energy storage container, the present disclosure also provides a fire pre-warning control method for an energy storage container. The fire extinguishing system and the fire pre-warning control method provided by the present disclosure adopt a combined use of multi-component fire extinguishing agents and can implement a full flood irrigated PACK-level water fire prevention and a full submerged space-level perfluorohexanone fire prevention. The fire extinguishing system and the fire pre-warning control method provided by the present disclosure achieve an early perception and accurate monitoring for fire hazards of the battery system by taking five kinds of thermal runaway characteristic quantities such as the smoke, the temperature, CO, H2, and VOC as important conditions for fire detection and early pre-warning of the energy storage container.

## Description

### FIELD OF INVENTION

The present disclosure relates to the technical field of energy storage battery and fire control, in particular relates to a fire extinguishing system for an energy storage container and a fire pre-warning control method for an energy storage container.

### BACKGROUND OF THE INVENTION

With the development of economic, the growth of electricity demand in our country is very strong, however, energy generation based on wind and solar energy is affected largely by territories and weather, has intermittent and volatility, needs a large scale energy storage system to regulate and control the power quality during grid-connection. Because of having advantages such as high capacity, strong reliability, high flexibility, strong environmental adaptability, the energy storage container has begun to be widely used in the power system generation, the power grid, and the user, and plays an important role in helping the power grid to regulate the power transmission and distribution, implementing peak cutting and valley filling, voltage and frequency regulation, relieving the power grid congestion, ensuring the electrical load.

However, because the battery energy density of the energy storage container is high, the working environment is relatively closed, the heat dissipation condition is limited, in the event of a fire, the consequences are unimaginable. According to incomplete statistics, from 2019 to today, there are as many as 26 explosion and fire accidents in the energy storage projects around the world, causing major personnel injuries and property losses, the safety problem of the energy storage container has sounded the alarm bell of the industry and cannot be ignored. At the present, the Comprehensive Department of the National Energy Administration clearly pointed out in the letter of opinion on the "Twenty-five key requirements for Preventing Power production accidents (2022 version) (draft for comment)", medium and large electrochemical energy storage power stations shall not use ternary lithium batteries, sodium sulfur batteries, and it is not appropriate to select echelon utilization of power batteries. When echelon utilization of power batteries is selected, consistency screening should be carried out and safety assessment should be carried out in combination with traceability data. Therefore, the battery system technology route inside the energy storage container will be dominated by lithium iron phosphate battery in the future. The basic structure of the lithium iron phosphate battery is mainly composed of a positive electrode, a negative electrode, an electrolyte, a diaphragm, a fluid collector, an electrode lead and a shell. From the respect of the internal composition of the lithium iron phosphate battery, its positive electrode is a transition metal compound of LiFeO₄, the negative electrode is composed of carbon elements such as graphite and graphene, the electrolyte is an organic solution containing lithium salt, the diaphragm is usually composed of polyethylene (PE) or polypropylene (PP) film, the fluid collector has positive and negative poles, the positive fluid collector is generally aluminum, the negative fluid collector is generally copper or nickel.

Obviously, the internal composition of the lithium iron phosphate battery is either a chemical material with active electrochemical characteristics, or a conductive metal, when the battery is subjected to external extrusion, collision, acupuncture and other mechanical damages, or frequently suffers from overcharge, overdischarge, high temperature and other extreme situations during the charge and discharge processes, the diaphragm will be caused to rupture and collapse, thus inducing a short circuit and dramatic chemical reaction in the battery, finally, the battery thermal runaway is triggered.

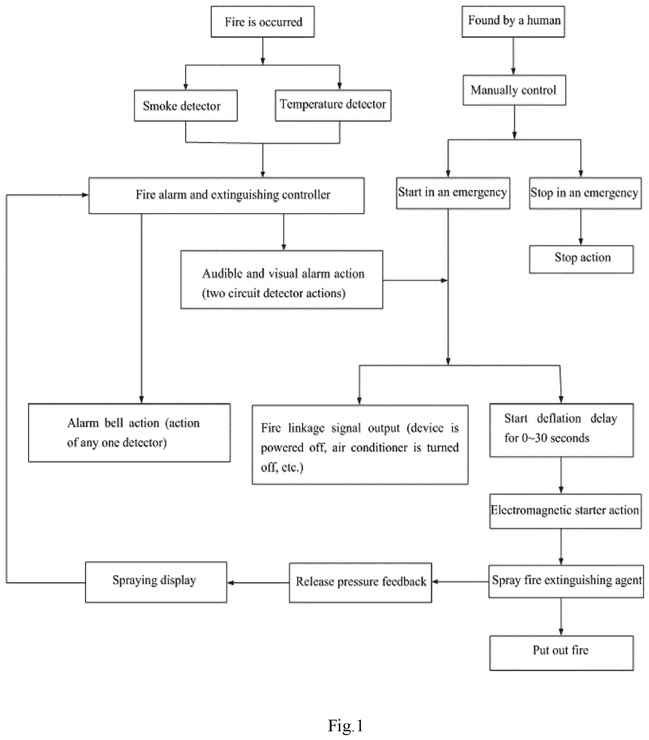

At the present stage, the fire detection and fire alarm design scheme for the energy storage container mainly refers to the national standard "GB 50116-2013 Design Code for Automatic fire Alarm System", configures and adopts a typical thermal detector and a typical smoke detector, the fire alarm system adopts an independent communication mode and is centrally controlled in the local pre-fabricated cabin. Please refer to Fig. 1, Fig. 1 is a logical control diagram of a fire detection and fire alarm system for a typical energy storage container in the prior art, it comprises two control modes, that is, automatic fire detection and control and manual control, achieves the purpose of the fire prevention and control according to four steps, that is, fire signal detection, fire alarming, linkage control, and extinguishing agents release, at the same time, has the function of manual intervention, can manually start or stop the fire alarming and extinguishing operation in an emergency.

With regard to the aforesaid scheme design for the energy storage container, its fire prevention and control system basically follows up the fire prevention design scheme of traditional architectures, there are three big drawbacks in applicability of the fire safety pre-warning. Firstly, in term of detection, the fire prevention of the existing energy storage mainly uses the smoke and temperature sensitivity as the basis of determining whether a fire disaster is occurred, the detection condition is relatively simple, the battery will be caused to be completely thermal runaway, the alarm will not be actioned until the generated temperature and smoke spread to the whole cabin, the fire disaster signal cannot be detected early. Secondly, in term of fire inhibition, the fire prevention of the existing energy storage mostly adopts aerosol, dry powder, heptafluoropropane and so on as fire extinguishing agents, these fire extinguishing agents cannot work again after one regular spray, they can only put out an open fire firstly, and cannot resolve the problem of battery reignition, cannot improve the thermal runaway phenomenon of the battery thoroughly. Finally, in term of fire control strategy, the fire prevention control logic of the existing energy storage is either too simple or too complex, this can easily result in a phenomenon that the battery is not work after thermal runaway is triggered or an malfunction is occurred when the battery normally works.

In conclusion, when facing the aforesaid many technical problems, how to provide a fire extinguishing system and a fire pre-warning control method for an energy storage container has become an urgent problem for those skilled in the art, so as to perform the smoke and temperature sensitivity and joint monitoring of various combustible gases, joint use of multi-component fire extinguishing agents, hierarchical pre-warning, linkage control, to achieve accurate detection of thermal runaway characteristic quantities, and can put out an open fire in time, lower the temperature quickly, continuously inhibit, block the spread of thermal runaway completely, prevent secondary reignition.

### SUMMARY

In order to achieve the aforesaid object, the present disclosure provides the following technical solution.

The present disclosure provides a fire extinguishing system for an energy storage container, in the present disclosure, the fire extinguishing system for an energy storage container is a fire extinguishing system combined using multi-component fire extinguishing agent, and the fire extinguishing system for an energy storage container is a hierarchical fire extinguishing system;

the fire extinguishing system for an energy storage container comprises a fire control main engine, a cluster-level and cabin-level perfluorohexanone fire subsystem, and a PACK-level water fire subsystem;

The cluster-level and cabin-level perfluorohexanone fire subsystem comprises a cabin-level fire detector arranged in the energy storage container for implementing a cabin-level fire detection inside the energy storage container; a cluster-level fire detector arranged in the energy storage container and set corresponding to a battery cluster for a cluster-level fire detection of the battery cluster; and a perfluorohexanone nozzle for spraying perfluorohexanone, the perfluorohexanone nozzle is used for implementing a zoned full submerged fire extinguishing of the perfluorohexanone fire extinguishing agent inside the energy storage container, the cabin-level fire detector and the cluster-level fire detector are both connected with signals of the fire control main engine;

The PACK-level water fire subsystem comprises a PACK-level fire detector arranged in the battery box for implementing a PACK-level fire detection inside the battery box; a spray nozzle for spraying municipal tap water, the spray nozzle is arranged in the battery box, the PACK-level fire detector is connected with the signal of the fire control main engine;

The fire control main engine is used to implement spray controls of the perfluorohexanone nozzle and the spray nozzle.

Preferably, in the fire extinguishing system for an energy storage container provided by the present disclosure, the cluster-level and cabin-level perfluorohexanone fire subsystem comprises a perfluorohexanone liquid storage tank for containing perfluorohexanone, and a first-class fire inhibitor pipeline for implementing a connection of the perfluorohexanone liquid storage tank and the perfluorohexanone nozzle, a first-class branch pipe is provided on the first-class fire inhibitor pipeline, the perfluorohexanone nozzle is arranged on the first-class branch pipe, a first-class zoned solenoid valve is provided on the first-class branch pipe, the first-class zoned solenoid valve is connected with a control of the fire control main engine.

Preferably, in the fire extinguishing system for an energy storage container provided by the present disclosure, a spatial pipeline solenoid valve is provided on the first-class fire inhibitor pipeline, the spatial pipeline solenoid valve is connected with the control of the fire control main engine.

Preferably, in the fire extinguishing system for an energy storage container provided by the present disclosure, the cabin-level fire detector and the cluster-level fire detector are connected with the signal of the fire control main engine through a first-class fire communication pipeline.

Preferably, in the fire extinguishing system for an energy storage container provided by the present disclosure, three cabins are provided in the energy storage container, which are respectively as follows: a fire cabin, a distribution cabin, and a battery cabin, corresponding to each one of the cabins, at least one of the cabin-level fire detectors is provided on a top inside of the energy storage container.

Preferably, in the fire extinguishing system for an energy storage container provided by the present disclosure, a plurality of functional cabinets are provided in the energy storage container, which respectively comprise a fire extinguishing inhibition cabinet, a converging cabinet, a high-pressure cabinet, and a plurality of battery cabinets, corresponding to each one of the battery cabinets, at least one of the cluster-level fire detectors is provided on an outside of a frame above a front door of a cabinet body.

Preferably, in the fire extinguishing system for an energy storage container provided by the present disclosure, one of the perfluorohexanone nozzles and one of the first-class zoned solenoid valves are provided on one of the first-class branch pipes and form one cabin-level fire unit; the cabin-level fire unit is provided with a plurality and all of the cabin-level fire units being arranged in parallel on the first-class fire inhibitor pipeline, corresponding to the converging cabinet, the high-pressure cabinet, and the battery cabinet, at least one of the cabin-level fire units is provided.

Preferably, in the fire extinguishing system for an energy storage container provided by the present disclosure, the PACK-level water fire subsystem comprises: a water storage tank for containing municipal tap water; and a second-class fire inhibitor pipeline for implementing a connection of the water storage tank and the spray nozzle, a second-class branch pipe is provided on the second-class fire inhibitor pipeline, the spray nozzle is provided on the second-class branch pipe, a second-class zoned solenoid valve is provided on the second-class branch pipe, the second-class zoned solenoid valve is connected with the control of the fire control main engine.

Preferably, in the fire extinguishing system for an energy storage container provided by the present disclosure, the second-class zoned solenoid valve is provided on the second-class fire inhibitor pipeline, the second-class zoned solenoid valve is connected with the control of the fire control main engine.

Preferably, in the fire extinguishing system for an energy storage container provided by the present disclosure, the PACK-level fire detector is connected with the signal of the fire control main engine through a second-class fire communication pipeline.

Preferably, in the fire extinguishing system for an energy storage container provided by the present disclosure, one of the spray nozzles and one of the battery box control valves are provided on one of the second-class branch pipes and form one PACK-level fire unit; the PACK-level fire unit is provided with a plurality and all of the PACK-level fire units being arranged in parallel on the second-class fire inhibitor pipeline, corresponding to each of the battery boxes, at least one of the PACK-level fire units is provided.

The present disclosure also provides a fire pre-warning control method for an energy storage container, in the fire pre-warning control method for an energy storage container, the present disclosure adopts the aforesaid fire extinguishing system for an energy storage container to perform fire monitoring and extinguishing; the fire pre-warning control method for an energy storage container adopts a hierarchical pre-warning mechanism and a multi-level fire control strategy to perform a full flood irrigated PACK-level water fire prevention and a full submerged space-level perfluorohexanone fire prevention for the energy storage container.

Preferably, in the fire pre-warning control method for an energy storage container provided by the present disclosure, comprises:
Step 1, obtaining monitoring signal of each detector, when at least one of the PACK-level, the cluster-level, and the cabin-level fire detectors monitors that battery thermal runaway characteristic quantity exceeds a standard value, a first-class warning is triggered and a first-class fire operation is made;
Step 2, continuing to obtain monitoring signal of each detector, when at least two of the PACK-level, the cluster-level, and the cabin-level fire detectors monitor that the battery thermal runaway characteristic quantity continues to exceed the standard value, a second-class warning is triggered and a second-class fire operation is made; and
Step 3, continuing to obtain monitoring signal of each detector, on a basis of keeping to trigger the second-class warning, if the battery thermal runaway continues to upgrade, a third-class warning is triggered and a third-class fire operation is made.

Preferably, in the fire pre-warning control method for an energy storage container provided by the present disclosure, the first-class fire operation is to upload the pre-warning information on to a monitoring platform of a fire control room through the fire control main engine and highlight relevant superscalar parameter on a local display and control unit.

Preferably, in the fire pre-warning control method for an energy storage container provided by the present disclosure, the second-class fire operation is to initiate a smoke exhaust fan and an electric shutter of the energy storage container to exhaust air for ventilation through the linkage of the fire control main engine, and perform a power reduction processing through a linkage of BMS and PCS, limit output of discharging power or input of charging power.

Preferably, in the fire pre-warning control method for an energy storage container provided by the present disclosure, the third-class fire operation is to turn off the smoke exhaust fan and the electric shutters through the linkage of the fire control main engine, disconnect the cluster-level and cabin-level high-pressure relays through the linkage of BMS, start a backup power supply, shut down through the linkage of PCS, and at the same time, perform a PACK-level fire extinguishing and a space-level fire extinguishing.

The present disclosure has the following beneficial effects.

The present disclosure provides a fire extinguishing system for an energy storage container, the fire extinguishing system for an energy storage container is a fire extinguishing system combined using multi-component fire extinguishing agent, and the fire extinguishing system for an energy storage container is a hierarchical fire extinguishing system; the fire extinguishing system for an energy storage container comprises a fire control main engine, a cluster-level and cabin-level perfluorohexanone fire subsystem, and a PACK-level water fire subsystem; the cluster-level and cabin-level perfluorohexanone fire subsystem comprises a cabin-level fire detector arranged in the energy storage container for implementing a cabin-level fire detection inside the energy storage container; a cluster-level fire detector arranged in the energy storage container and arranged corresponding to a battery cluster for a cluster-level fire detection of the battery cluster; and a perfluorohexanone nozzle for spraying perfluorohexanone, the perfluorohexanone nozzle is used for implementing a zoned full submerged fire extinguishing of the perfluorohexanone fire extinguishing agents inside the energy storage container, the cabin-level fire detector and the cluster-level fire detector are both connected with signals of the fire control main engine; the PACK-level water fire subsystemcomprises a PACK-level fire detector arranged in the battery box for implementing a PACK-level fire detection inside the battery box; and a spray nozzle for spraying municipal tap water, the spray nozzle is arranged in the battery box, the PACK-level fire detector is connected with the signals of the fire control main engine; the fire control main engine is used to implement a spray control of the perfluorohexanone nozzle and the spray nozzle. Based on the fire extinguishing system for an energy storage container, the present disclosure also provides a fire pre-warning control method for an energy storage container.

In the present disclosure, the fire extinguishing system and fire pre-warning control method provided by the present disclosure adopt a combined use of multi-component fire extinguishing agents, through the fire control strategy, municipal tap water can be directly injected into the battery box in which thermal runaway is occurred, the perfluorohexanone fire extinguishing agents can be sprayed into the battery cabin, and a full flood irrigated PACK-level water fire prevention and a full submerged space-level perfluorohexanone fire prevention can be implemented. The fire extinguishing system and the fire pre-warning control method provided by the present disclosure achieve an early perception and accurate monitoring for fire hazards of the battery system by taking five kinds of thermal runaway characteristic quantities such as the smoke, the temperature, CO, H₂, and VOC as important conditions for fire detection and early pre-warning of the energy storage container. The fire extinguishing system and the fire pre-warning control method provided by the present disclosure adopts a three-level fire prevention and control design and hierarchical pre-warning control solution, which is respectively as follows: PACK-level (battery box level) prevention and control and fire pre-warning, cluster-level prevention and control and fire pre-warning, and cabin-level prevention and control and fire pre-warning, and the present disclosure performs a comprehensive fire protection for the energy storage container in a block layout and centralized control manner.

### BRIEF DESCRIPTION OF THE DRAWINGS

The drawings in the specification consisted of a part of the application are used to provide a further understanding for the present disclosure, the schematic embodiment and its descriptions in the present disclosure are used to interpret the present disclosure, and do not consist an inappropriate definition to the present disclosure.
Fig. 1 is a logical control diagram of a fire detection and fire alarm system for a typical energy storage container in the prior art.
Fig.2 is a schematic diagram of a cluster-level and cabin-level fire prevention arrangement of a fire extinguishing system for an energy storage container provided by the present disclosure.
Fig.3 is a schematic diagram of a PACK-level fire prevention arrangement of a fire extinguishing system for an energy storage container provided by the present disclosure.
Fig.4 is a logical flow diagram of a fire pre-warning control of a fire pre-warning control method for an energy storage container provided by the present disclosure.
Fig.5 is a table of a fire alarming level and triggering condition in the present disclosure.

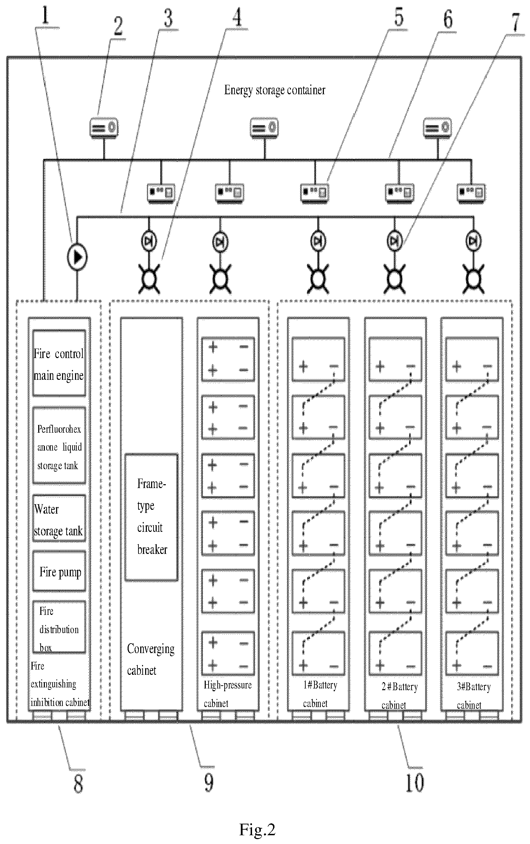

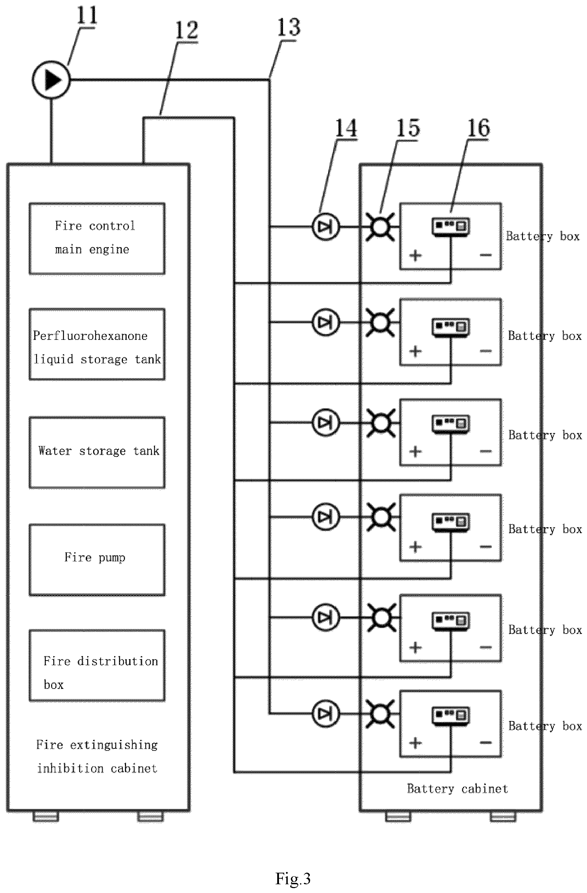

In Fig.2 and Fig.3, the correspondence between part names and drawing marks is:
spatial pipeline solenoid valve 1, cabin-level fire detector 2, first-class fire inhibitor pipeline 3, perfluorohexanone nozzle 4, cluster-level fire detector 5, first-class fire communication pipeline 6, first-class zoned solenoid valve 7, fire cabin 8, distribution cabin 9, battery cabin 10, second-class zoned solenoid valve 11, second-class fire communication pipeline 12, second-class fire inhibitor pipeline 13, battery box control valve 14, spray nozzle 15, PACK-level fire detector 16.

### DETAILED DESCRIPTION OF THE EMBODYMENTS

The present disclosure will be detailed with reference to the drawings in combination with embodiments below. Each embodiment is provided by the way of interpreting the present disclosure rather than limiting the present disclosure. Actually, it should be clear to those skilled in the art, modifications and variants may be made in the present disclosure without departing from the scope or spirit of the present disclosure. For example, features illustrated or descripted as a part of an embodiment may be used in another embodiment, so as to produce yet another embodiment. Therefore, it is expected to include such modifications and variants within the scope of the attached claims and its equivalents into the present disclosure.

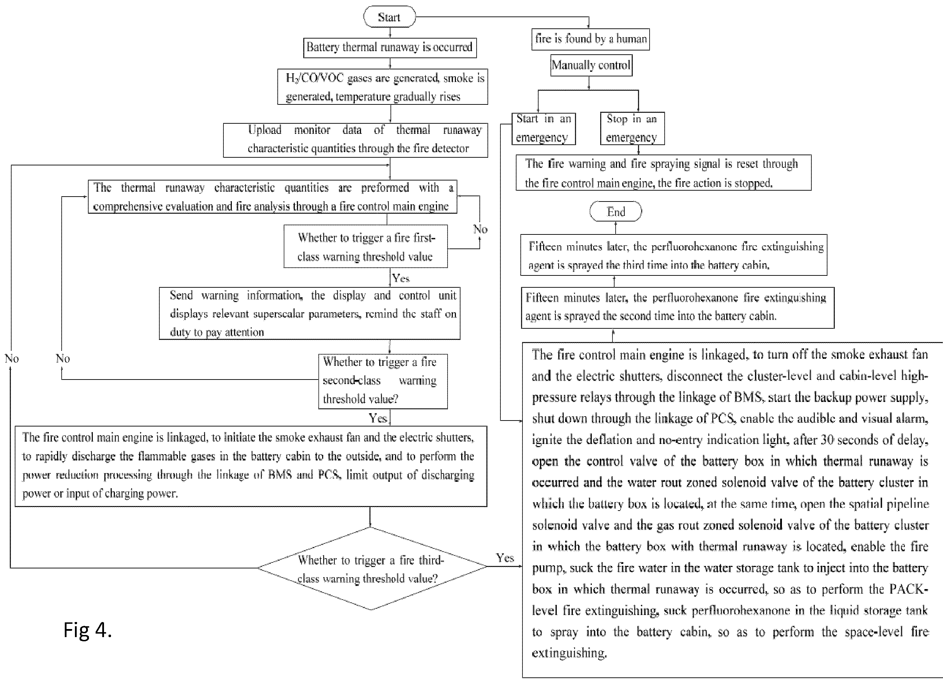

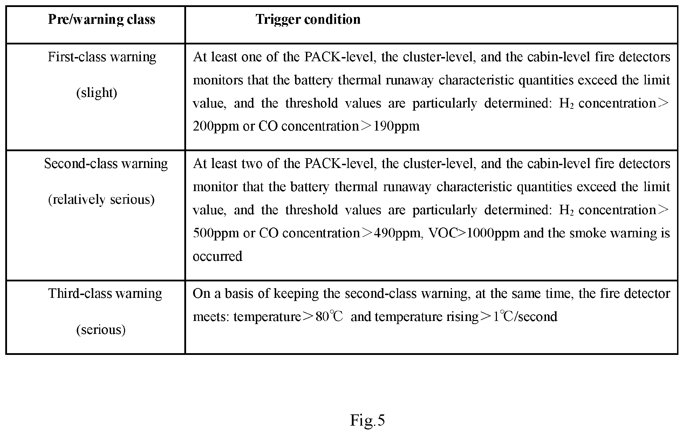

Please refer to Fig. 2 to Fig.5, wherein, Fig.2 is a schematic diagram of a cluster-level and cabin-level fire prevention arrangement of a fire extinguishing system for an energy storage container provided by the present disclosure. Fig.3 is a schematic diagram of a PACK-level fire prevention arrangement of a fire extinguishing system for an energy storage container provided by the present disclosure. Fig.4 is a logical flow diagram of a fire pre-warning control of a fire pre-warning control method for an energy storage container provided by the present disclosure. Fig.5 is a table of a fire alarming level and triggering condition in the present disclosure.

The present disclosure provides a fire extinguishing system for an energy storage container, in particular, the fire extinguishing system for an energy storage container is a fire extinguishing system combined using multi-component fire extinguishing agent, and the fire extinguishing system for an energy storage container is a hierarchical fire extinguishing system.

In the present disclosure, the fire extinguishing system for an energy storage container comprises a fire control main engine, a cluster-level and cabin-level perfluorohexanone fire subsystem, and a PACK-level water fire subsystem.

In particular, the cluster-level and cabin-level perfluorohexanone fire subsystem comprises a cabin-level fire detector 2 arranged in the energy storage container for implementing a cabin-level fire detection inside the energy storage container; a cluster-level fire detector 5 arranged in the energy storage container and arranged corresponding to a battery cluster for a cluster-level fire detection of the battery cluster; and a perfluorohexanone nozzle 4 for spraying perfluorohexanone, the perfluorohexanone nozzle 4 is used for implementing a zoned full submerged fire extinguishing of the perfluorohexanone fire extinguishing agents inside the energy storage container, the cabin-level fire detector 2 and the cluster-level fire detector 5 are both connected with signals of the fire control main engine. The cluster-level and cabin-level perfluorohexanone fire subsystem comprises a perfluorohexanone liquid storage tank for containing perfluorohexanone; and a first-class fire inhibitor pipeline 3 for implementing the connection of the perfluorohexanone liquid storage tank and the perfluorohexanone nozzle 4, a first-class branch pipe is provided on the first-class fire inhibitor pipeline 3, the perfluorohexanone nozzle 4 is arranged on the first-class branch pipe, a first-class zoned solenoid valve 7 is provided on the first-class branch pipe, the first-class zoned solenoid valve 7 is connected with the control of the fire control main engine.

Furthermore, a spatial pipeline solenoid valve 1 is provided on the first-class fire inhibitor pipeline 3, the spatial pipeline solenoid valve 1 is connected with the control of the fire control main engine. The cabin-level fire detector 2 and the cluster-level fire detector 5 are connected with the signals of the fire control main engine through a first-class fire communication pipeline 6.

For the cabin-level fire detector 2 and the cluster-level fire detector 5, they both are detectors arranged inside the energy storage container (preferably arranged on the top inside of the energy storage container, the cabin-level fire detector 2 is arranged on the top inside of the energy storage container, the cluster-level fire detector 5 is arranged in the energy storage container and on the outside of the frame above the front door of each cabinet body). As shown in Fig.2, three zones (cabins) are provided in the energy storage container, which are respectively as follows: a fire cabin 8, a distribution cabin 9, and a battery cabin 10, corresponding to the aforesaid three cabin zones, the cabin-level fire detector 2 is provided to implement the fire detection of these three zones. A "cabinet" structure is also provided in each cabin zone, for example, a fire extinguishing inhibition cabinet is provided in the fire cabin 8, a converging cabinet and a high-pressure cabinet are provided in the distribution cabin 9, a plurality of battery cabinets are provided in the battery cabin 10. Corresponding to each "cabinet" structure, the cluster-level fire detector 5 is provided to implement the cluster-level fire detection (in particular, provided in corresponding to the converging cabinet, the high-pressure cabinet, and each battery cabinet).

Generally, three cabins are provided in the energy storage container, which are respectively as follows: a fire cabin 8, a distribution cabin 9, a battery cabin 10, corresponding to each cabin, at least one cabin-level fire detector 2 is provided on the top inside of the energy storage container. At the meantime, a plurality of functional cabinets are provided in the energy storage container, which respectively comprise a fire extinguishing inhibition cabinet, a converging cabinet, a high-pressure cabinet, and a plurality of battery cabinets, corresponding to each battery cabinet, at least one cluster-level fire detectors 5 are provided on the outside of the frame above the front door of the cabinet body. Wherein, the fire cabin 8 corresponds to the fire extinguishing inhibition cabinet, the distribution cabin 9 corresponds to the converging cabinet and the high-pressure cabinet, the battery cabin 10 corresponds to the plurality of battery cabinets.

Particularly, one perfluorohexanone nozzle 4 and one first-class zoned solenoid valve 7 are provided on one first-class branch pipe and form one cabin-level fire unit; the cabin-level fire unit is provided with a plurality and all of the cabin-level fire units being arranged in parallel on the first-class fire inhibitor pipeline 3, corresponding to the converging cabinet, the high-pressure cabinet, and the battery cabinet, at least one cabin-level fire unit is provided.

Particularly, the PACK-level water fire subsystem comprises a PACK-level fire detector 16 arranged in the battery box for implementing a PACK-level fire detection inside the battery box; a spray nozzle 15 for spraying municipal tap water, the spray nozzle 15 is arranged in the battery box, the PACK-level fire detector 16 is connected with the signals of the fire control main engine; the fire control main engine is used to implement spray controls of the perfluorohexanone nozzle 4 and the spray nozzle 15.

The PACK-level water fire subsystem comprises a water storage tank for containing municipal tap water; and a second-class fire inhibitor pipeline 13 for implementing the connection of the water storage tank and the spray nozzle 15, a second-class branch pipe is provided on the second-class fire inhibitor pipeline 13 , the spray nozzle 15 is provided on the second-class branch pipe, a second-class zoned solenoid valve 11 is provided on the second-class branch pipe, the second-class zoned solenoid valve 11 is connected with the control of the fire control main engine. The second-class zoned solenoid valve 11 is provided on the second-class fire inhibitor pipeline 13, the second-class zoned solenoid valve 11 is connected with the control of the fire control main engine, the PACK-level fire detector 16 is connected with the signals of the fire control main engine through a second-class fire communication pipeline 12.

Particularly, one spray nozzle 15 and one battery box control valve 14 are provided on one second-class branch pipe and form one PACK-level fire unit; the PACK-level fire unit is provided with a plurality and all of the PACK-level fire units being arranged in parallel on the second-class fire inhibitor pipeline 13, corresponding to each battery box, at least one of the PACK-level fire units is provided.

The present disclosure also provides a fire pre-warning control method for an energy storage container, in this fire pre-warning control method for an energy storage container, the present disclosure employs the aforesaid fire extinguishing system for an energy storage container to perform fire monitoring and extinguishing; the fire pre-warning control method for an energy storage container employs a hierarchical pre-warning mechanism and a multi-level fire control strategy to perform a full flood irrigated PACK-level water fire prevention and a full submerged space-level perfluorohexanone fire prevention for the energy storage container.

Particularly, the present disclosure comprises the following steps:
Step 1, obtaining monitoring signal of each detector, when at least one of the PACK-level, the cluster-level, and the cabin-level fire detectors monitors that battery thermal runaway characteristic quantity exceeds the standard value, a first-class warning is triggered and a first-class fire operation is made, wherein, the first-class fire operation is to upload the pre-warning information on to a monitoring platform of the fire control room through the fire control main engine and highlight relevant superscalar parameters on the local display and control unit.
Step 2, continuing to obtain monitoring signal of each detector, when at least two of the PACK-level, the cluster-level, and the cabin-level fire detectors monitor that the battery thermal runaway characteristic quantity continues to exceed the standard value, a second-class warning is triggered and a second-class fire operation is made, wherein, the second-class fire operation is to initiate a smoke exhaust fan and an electric shutter of the energy storage container to exhaust air for ventilation through the linkage of the fire control main engine, and perform a power reduction processing through a linkage of BMS and PCS, limit output of discharging power or input of charging power.
Step 3, continuing to obtain monitoring signal of each detector, on a basis of keeping to trigger the second-class warning, if the battery thermal runaway continues to upgrade, a third-class warning is triggered and a third-class fire operation is made, wherein, the third-class fire operation is to turn off the smoke exhaust fan and the electric shutters through the linkage of the fire control main engine, disconnect the cluster-level and cabin-level high-pressure relays through the linkage of BMS, start a backup power supply, shut down through the linkage of PCS, and at the same time, perform a PACK-level fire extinguishing and a space-level fire extinguishing.

Lithium battery thermal runaway is a process phenomenon and has a long time period, upon investigation and research, we found that a large amount of carbonic oxide (CO), hydrogen (H₂), and volatile flammable alkanes (VOC) will be released at the early period of this process (lithium battery thermal runaway), in lithium iron phosphate battery thermal runaway gaseous products, CO accounts for 27%, H₂ accounts for 22%, VOC accounts for 8%. In addition, Group Standard "T/CEC 373-2020 Prefabricated cabin lithium iron phosphate battery energy storage power station fire technical specifications" section 4.9.3 clearly stipulates that combustible gas detector, temperature detector and smoke detector should be arranged in the battery prefabricated cabin, the number of detectors arranged for each type should not be less than two, should be able to detect H₂ and CO combustible gas concentration value, the measurement range is below 50% LEL (lower limit of explosive), should be able to set two levels of combustible gas concentration action threshold.

In the present disclosure, the fire pre-warning control method provided by the present disclosure achieves an early perception and accurate monitoring for fire hazards of the battery system by taking five kinds of thermal runaway characteristic quantities such as the smoke, the temperature, CO, H₂, and VOC as important conditions for fire detection and early pre-warning of the energy storage container.

As for the fire explosion accident of the energy storage container, at the early time period, some single battery occurs with thermal runaway, then it spreads to the module and ignites the whole battery box, the thermal runaway fire disaster of the battery box then causes the whole cluster battery box to ignite, finally leading to the battery cabin to explode and ignite in a large area, the fire has features of rapidly spreading and being uncontrollable.

The existing energy storage fire prevention mostly uses aerosol, dry powder, heptafluoropropane and so on as main fire extinguishing agents, however, upon tested by practices, the drawbacks of these fire extinguishing mediums are all obvious, for example, the aerosol fire extinguishing agent is easy to cause high temperature when being used, particles will suspend on the surface of an object, will not be easy to clear up and be easy to cause damage to the electrical appliances; the dry powder fire extinguishing agent has little effect to the lithium battery fire extinguishing, after spraying with dray powders, the site is in a mess, the sprayed substance is difficult to clean, if being in a vibration environment for a long time, there are problems of easy hardening and being unavailable due to moisture with the agents; the heptafluoropropane fire extinguishing agent has good fire extinguishing effect, but has bad effect for lowering the temperature of the battery, the temperature of the battery will rise again, thus give rise to secondary reignition. In addition, the heptafluoropropane fire extinguishing agent is expensive, once the system is blown out, the cost of the secondary packaging is large.

The present disclosure creatively adopts the perfluorohexanone fire extinguishing agent, the perfluorohexanone fire extinguishing agent has advantages of environment friendly and non-toxic, good electrical insulation property, no residues after being used, no causing secondary damage to the devices and so on, and the perfluorohexanone fire extinguishing agent is liquid at room temperature, it is facilitated to encapsulate, transport and reserve, and may be sprayed many times at a fixed spot, it can effectively resolve the reignition problem, and belongs to a good fire extinguishing agent for the electrochemical energy storage battery. In addition, the present disclosure adopts municipal tap water as a fire extinguishing agent, it can directly achieve the effect of cooling down, oxygen isolation, and chemical inhibition, can quickly terminate the electrochemical reaction inside the battery and block the spread of the thermal runaway, and at the same time, it has virtues of low price and easy access.

Compared with the prior art, the fire extinguishing system and the fire pre-warning control method for an energy storage container provided by the present disclosure adopts a three-level fire prevention and control design and hierarchical pre-warning control solution, which is respectively as follows: PACK-level (battery box level) prevention and control and fire pre-warning, cluster-level prevention and control and fire pre-warning, and cabin-level prevention and control and fire pre-warning, at the same time, it adopts a combined use of multi-component fire extinguishing agents, through the fire control strategy, municipal tap water can be directly injected into the battery box in which thermal runaway is occurred, the perfluorohexanone fire extinguishing agent can be sprayed into the battery cabin, and a full flood irrigated PACK-level water fire prevention and a full submerged space-level perfluorohexanone fire prevention can be implemented, an open fire can be quickly and effectively put out, the temperature can be quickly lowered, and the problem of secondary reignition can be thoroughly resolved. As shown in Fig. 2 and Fig.3, Fig.2 is a schematic diagram of a cluster-level and cabin-level fire prevention arrangement of a fire extinguishing system for an energy storage container provided by the present disclosure. Fig.3 is a schematic diagram of a PACK-level fire prevention arrangement of a fire extinguishing system for an energy storage container provided by the present disclosure.

In the present disclosure, the energy storage container generally uses a 40 or 20 foot standard container as a carrier, and is internally integrated with a lithium iron phosphate battery system, a energy storage conversion system (PCS), a battery management system (BMS), an energy management system (EMS), a thermal management system (liquid or air cooling system), a fire system, a distribution system and so on. The lithium iron phosphate battery system may be arranged into a plurality of battery clusters according to the voltage/current design level and placed into a plurality of battery cabinets; the distribution system is divided into an alternating-current distribution section and a direct-current distribution section, the direct-current distribution section comprises a high-pressure cabinet and a converging cabinet; the fire system comprises a fire distribution box, a fire pump, a fire extinguishing agent storage tank, a fire control main engine, a fire detector, an audible and visual alarm, a deflation and no-entry indication light, an anti-explosion and smoke exhaust fan, an electric shutters, an anti-explosion and pressure release window, a manual/automatic conversion and urgent start and stop apparatus, a fire alarm bell, a solenoid valve assembly, a fire pipeline, a inhibitor nozzle, etc.. wherein, the fire distribution box, the fire pump, the fire extinguishing agent storage tank, the fire control main engine is generally placed in the fire extinguishing inhibition cabinet. Based on the structure of the aforesaid energy storage container, the present disclosure adopts two fire extinguishing agents, that is, municipal tap water and perfluorohexanone, so as to respectively achieve the water fire prevention of the battery box and the perfluorohexanone fire prevention of the battery cabin, because of adopting two different fire extinguishing agents, the fire extinguishing agent storage tank is divided into a water storage tank and a perfluorohexanone liquid storage tank.

The interior of the energy storage container can be divided into three cabins, that is, a fire cabin 8, a distribution cabin 9, and a battery cabin 10, the cluster-level and cabin-level perfluorohexanone fire pipe net consists of a spatial pipeline solenoid valve 1, a cabin-level fire detector 2, a first-class fire inhibitor pipeline 3, a perfluorohexanone nozzle 4, a cluster-level fire detector 5, a first-class fire communication pipeline 6, and a first-class zoned solenoid valve 7. The cabin-level and cluster-level prevention and control commonly uses the perfluorohexanone fire pipeline and nozzle, for the cabin-level prevention and control, one cabin-level fire detector 2 is respectively arranged on each top space of the fire cabin 8, the distribution cabin 9, and the battery cabin 10, it can detect flammable gases (CO, H₂, VOC) escaped due to early thermal runaway of the lithium battery, the temperature and the smoke, accurately determine the cabin in which a fire is occurred, and enable the perfluorohexanone fire extinguishing agent to perform the zoned full submerged fire extinguishing through the linkage of the fire pump.

The pipe net of the PACK-level water fire prevention consists of a second-class zoned solenoid valve 11, a second-class fire communication pipeline 12, a second-class fire inhibitor pipeline 13, a battery box control valve 14, a spray nozzle 15, and a PACK-level fire detector 16. The PACK-level water fire pipe net is arranged separately from the cluster-level and cabin-level perfluorohexanone fire pipe net, one PACK-level fire detector 16 is mounted inside each battery box of the battery cabinet, the spray nozzle 15 is mounted on the panel of the battery box body, the fire water is sprayed into the inside of the battery box through the spray nozzle, directly acts on the battery with thermal runaway, forms an inert environment in the box body in a way of target spraying, quickly and effectively puts out early sparks.

The fire extinguishing system and fire pre-warning control method provided by the present disclosure adopts a hierarchical pre-warning mechanism according to the thermal runaway progress of the battery, adopts a multi-level fire control strategy, achieves the linkage control of the pre-warning information and BMS, PCS, the exhaust smoke and air, the audible and visual alarm, and the high-pressure electrical switches through the fire control, quickly puts out a fire in ensuring safety.

The fire warning level and the triggering condition are as shown in Fig.5, the control logical flow diagram is as shown in Fig.4, the specific description is as follows.
(1) The fire extinguishing system is in an automatic control state (default state), when at least one of the PACK-level, the cluster-level, and the cabin-level fire detectors monitors that the battery thermal runaway characteristic quantities exceed the standard value and a first-class warning threshold valve is triggered, i.e. H₂ concentration>(200±30)ppm or CO concentration>(190±15)ppm, the pre-warning information will be immediately uploaded onto a monitoring platform of the fire control room through the fire control main engine and relevant superscalar parameters will be highlighted on the local display and control unit, to remind the staff on duty to pay attention.
(2) When at least two of the PACK-level, the cluster-level, and the cabin-level fire detectors monitor that the battery thermal runaway characteristic quantities exceed the standard value and a second-class warning threshold valve is triggered, i.e. H₂ concentration> (500±50)ppm and CO concentration>(490±30)ppm and VOC>(1000±100)ppm and starting smoke alarm, the fire control main engine will begin to be linkaged, to initiate the smoke exhaust fan and the electric shutters to exhaust air for ventilation, to rapidly discharge the flammable gases in the battery cabin to the outside, to lower the gas explosion concentration, and to perform the power reduction processing through the linkage of BMS and PCS, limit the output of the discharging power or the input of the charging power.
(3) On the basis of keeping to trigger the second-class warning, the battery thermal runaway continues to upgrade, when the fire detector simultaneously monitors that the temperature of the battery box or the battery cabin is more than (80±2)°C and the temperature rising is larger than 1°C/second, i.e. the three-class warning threshold value is triggered, the fire control main engine will be linkaged, to turn off the smoke exhaust fan and the electric shutters, disconnect the cluster-level and cabin-level high-pressure relays through the linkage of BMS, start the backup power supply, shut down through the linkage of PCS, enable the audible and visual alarm, ignite the deflation and no-entry indication light, after 30 seconds of delay, open the control valve of the battery box in which thermal runaway is occurred and the water rout zoned solenoid valve of the battery cluster in which the battery box is located, at the same time, open the spatial pipeline solenoid valve and the gas rout zoned solenoid valve of the battery cluster in which the battery box with thermal runaway is located, enable the fire pump, suck the fire water in the water storage tank to inject into the battery box in which thermal runaway is occurred, so as to perform the PACK-level fire extinguishing, suck perfluorohexanone in the liquid storage tank to spray into the battery cabin, so as to perform the space-level fire extinguishing.
(4) According to the electrochemical reaction mechanism inside the lithium iron phosphate battery, in order to prevent the secondary reignition, the perfluorohexanone fire extinguishing agent in the battery cabin is sprayed for three times, spraying 40% of the agent for the first time, spraying 30% of the agent for the second time, spraying the remaining 30% of the agent for the third time, the interval time of the three times is 15 minutes.
(5) The manual/automatic conversion and urgent start and stop apparatus set up through the outside wall of the container may convert the fire extinguishing system into the manual control state, in order to perform the manual intervention. When a fire is discovered by a human, he/she can press the urgent enable button by hands, directly trigger the fire pre-warning and spraying operation, however, at the fire pre-warning and spraying operation delay stage or the fire extinguishing enable stage, he/she can complete the fire extinguishing operation through a stop button.

Against the following existed drawbacks of the fire extinguishing system of the present energy storage container, that is, the detection volume for the battery thermal runaway is relatively simple, the fire extinguishing agent and the fire control strategy cannot effectively resolve the battery reignition, the present disclosure provides a fire extinguishing system and a fire pre-warning control method for an energy storage container, through the combined monitoring of the smoke and temperature sensitivity and a plurality of flammable gases, a combined use of multi-component fire extinguishing agents, multi-control strategy and hierarchical pre-warning, and linkage control, the present disclosure can implement a full flood irrigated PACK-level water fire prevention and a full submerged space-level perfluorohexanone fire prevention in a block layout and centralized control manner, block the spread of the thermal runaway thoroughly, effectively resolve the problem of the battery temperatre decrease and the secondary reignition.
1. The fire extinguishing system and the fire pre-warning control method provided by the present disclosure achieve an early perception and accurate monitoring for fire hazards of the battery system by taking five kinds of thermal runaway characteristic quantities such as the smoke, the temperature, CO, H₂, and VOC as important conditions for fire detection and early pre-warning of the energy storage container.
2. The fire extinguishing system and the fire pre-warning control method provided by the present disclosure adopts a three-level fire prevention and control design and hierarchical pre-warning control solution, which is respectively as follows: PACK-level (battery box level) prevention and control and fire pre-warning, cluster-level prevention and control and fire pre-warning, and cabin-level prevention and control and fire pre-warning, and the present disclosure performs a comprehensive fire protection for the energy storage container in a block layout and centralized control manner.
3. The fire extinguishing system and the fire pre-warning control method provided by the present disclosure adopts a combined use of multi-component fire extinguishing agents, through the fire control strategy, municipal tap water can be directly injected into the battery box in which thermal runaway is occurred, the perfluorohexanone fire extinguishing agents can be sprayed into the battery cabin, thus achieving a full flood irrigated PACK-level water fire prevention and a full submerged space-level perfluorohexanone fire prevention.

The above contents are only preferable embodiments of the present disclosure, and do not limit the present disclosure, for those skilled in the art, the present disclosure may have various modifications and variants. Any modifications, equivalent substitutions, improvements, etc. made within the spirit and principle of the present disclosure, should be included in the protection scope of the present disclosure.

## Claims

1. A fire extinguishing system for an energy storage container, wherein
the fire extinguishing system for an energy storage container is a fire extinguishing system combined using multi-component fire extinguishing agent, and the fire extinguishing system for an energy storage container is a hierarchical fire extinguishing system,
the fire extinguishing system for an energy storage container comprises a fire control main engine, a cluster-level and cabin-level perfluorohexanone fire subsystem, and a PACK-level water fire subsystem,
the cluster-level and cabin-level perfluorohexanone fire subsystem comprises a cabin-level fire detector arranged in the energy storage container for implementing a cabin-level fire detection inside the energy storage container; a cluster-level fire detector arranged in the energy storage container and arranged corresponding to a battery cluster for a cluster-level fire detection of the battery cluster; and a perfluorohexanone nozzle for spraying perfluorohexanone, the perfluorohexanone nozzle is used for implementing a zoned full submerged fire extinguishing of the perfluorohexanone fire extinguishing agent inside the energy storage container, the cabin-level fire detector and the cluster-level fire detector are both connected with signal of the fire control main engine,
the PACK-level water fire subsystem comprises: a PACK-level fire detector arranged in the battery box for implementing a PACK-level fire detection inside the battery box; a spray nozzle for spraying municipal tap water, the spray nozzle is arranged in the battery box, the PACK-level fire detector is connected with the signal of the fire control main engine,
the fire control main engine is used to implement spray controls of the perfluorohexanone nozzle and the spray nozzle.

2. The fire extinguishing system for an energy storage container according to claim 1, wherein
the cluster-level and cabin-level perfluorohexanone fire subsystem comprises: a perfluorohexanone liquid storage tank for containing perfluorohexanone, and a first-class fire inhibitor pipeline for implementing a connection of the perfluorohexanone liquid storage tank and the perfluorohexanone nozzle, a first-class branch pipe is provided on the first-class fire inhibitor pipeline, the perfluorohexanone nozzle is arranged on the first-class branch pipe, a first-class zoned solenoid valve is provided on the first-class branch pipe, the first-class zoned solenoid valve is connected with a control of the fire control main engine.

3. The fire extinguishing system for an energy storage container according to claim 2, wherein
a spatial pipeline solenoid valve is provided on the first-class fire inhibitor pipeline, the spatial pipeline solenoid valve is connected with the control of the fire control main engine.

4. The fire extinguishing system for an energy storage container according to claim 3, wherein
the cabin-level fire detector and the cluster-level fire detector are connected with the signal of the fire control main engine through a first-class fire communication pipeline,
preferably, three cabins are provided in the energy storage container, which are respectively as follows: a fire cabin, a distribution cabin, and a battery cabin, corresponding to each one of the cabins, at least one of the cabin-level fire detectors is provided on a top inside of the energy storage container ,
preferably, a plurality of functional cabinets are provided in the energy storage container, which respectively comprise a fire extinguishing inhibition cabinet, a converging cabinet, a high-pressure cabinet, and a plurality of battery cabinets, corresponding to each one of the battery cabinets, at least one of the cluster-level fire detectors is provided on an outside of a frame above a front door of a cabinet body.

5. The fire extinguishing system for an energy storage container according to claim 4, wherein
one of the perfluorohexanone nozzles and one of the first-class zoned solenoid valves are provided on one of the first-class branch pipes and form one cabin-level fire unit,
the cabin-level fire unit is provided with a plurality and all of the cabin-level fire units being arranged in parallel on the first-class fire inhibitor pipeline, corresponding to the converging cabinet, the high-pressure cabinet, and the battery cabinet, at least one of the cabin-level fire units is provided.

6. The fire extinguishing system for an energy storage container according to claim 1, wherein
the PACK-level water fire subsystem comprises a water storage tank for containing municipal tap water; and a second-class fire inhibitor pipeline for implementing a connection of the water storage tank and the spray nozzle, a second-class branch pipe is provided on the second-class fire inhibitor pipeline, the spray nozzle is provided on the second-class branch pipe, a second-class zoned solenoid valve is provided on the second-class branch pipe, the second-class zoned solenoid valve is connected with the control of the fire control main engine.

7. The fire extinguishing system for an energy storage container according to claim 6, wherein
the second-class zoned solenoid valve is provided on the second-class fire inhibitor pipeline, the second-class zoned solenoid valve is connected with the control of the fire control main engine,
preferably, the PACK-level fire detector is connected with the signal of the fire control main engine through a second-class fire communication pipeline.

8. The fire extinguishing system for an energy storage container according to claim 6, wherein
one of the spray nozzles and one of the battery box control valves are provided on one of the second-class branch pipes and form one PACK-level fire unit,
the PACK-level fire unit is provided with a plurality and all of the PACK-level fire units being arranged in parallel on the second-class fire inhibitor pipeline, corresponding to each of the battery boxes, at least one of the PACK-level fire units is provided.

9. A fire pre-warning control method for an energy storage container, wherein
fire monitoring and extinguishing will be preformed by using the fire extinguishing system for an energy storage container according to any one of claims 1-8,
the fire pre-warning control method for an energy storage container adopts a hierarchical pre-warning mechanism and a multi-level fire control strategy to perform a full flood irrigated PACK-level water fire prevention and a full submerged space-level perfluorohexanone fire prevention for the energy storage container.

10. The fire pre-warning control method for an energy storage container according to claim 9, comprising:
Step 1, obtaining monitoring signal of each detector, when at least one of the PACK-level, the cluster-level, and the cabin-level fire detectors monitors that battery thermal runaway characteristic quantity exceeds a standard value, a first-class warning is triggered and a first-class fire operation is made;
Step 2, continuing to obtain monitoring signal of each detector, when at least two of the PACK-level, the cluster-level, and the cabin-level fire detectors monitor that the battery thermal runaway characteristic quantity continues to exceed the standard value, a second-class warning is triggered and a second-class fire operation is made; and
Step 3, continuing to obtain monitoring signal of each detector, on a basis of keeping to trigger the second-class warning, if the battery thermal runaway continues to upgrade, a third-class warning is triggered and a third-class fire operation is made,
preferably, the first-class fire operation is to upload the pre-warning information on to a monitoring platform of a fire control room through the fire control main engine and highlight relevant superscalar parameter on a local display and control unit,
preferably, the second-class fire operation is to initiate a smoke exhaust fan and an electric shutter of the energy storage container to exhaust air for ventilation through a linkage of the fire control main engine, and perform a power reduction processing through a linkage of BMS and PCS, limit output of discharging power or input of charging power,
preferably, the third-class fire operation is to turn off the smoke exhaust fan and the electric shutter through the linkage of the fire control main engine, disconnect the cluster-level and cabin-level high-pressure relay through the linkage of BMS, start a backup power supply, shut down through the linkage of PCS, and at the same time, perform a PACK-level fire extinguishing and a space-level fire extinguishing.

11. The fire pre-warning control method for an energy storage container according to claim 10, comprising:
in the Step 2, continuing to obtain monitoring signal of each detector, when at least two of the PACK-level, the cluster-level, and the cabin-level fire detectors monitor that the battery thermal runaway characteristic quantity continues to exceed the standard value, and when its number is larger than that of the fire detector which are monitored in the Step 1 that the battery thermal runaway characteristic quantity exceeded the standard value, a second-class warning is triggered and a second-class fire operation is made.

12. The fire pre-warning control method for an energy storage container according to claim 9, comprising:
Step 1, obtaining monitoring signal of each detector, when a fire detector in the PACK-level, the cluster-level, and the cabin-level fire detectors monitors that battery thermal runaway characteristic quantity exceeds a standard value, i.e. exceeds a first-class warning threshold value, a first-class warning is triggered and a first-class fire operation is made;
Step 2, continuing to obtain monitoring signal of each detector, when a fire detector in the PACK-level, the cluster-level, and the cabin-level fire detectors monitors that the battery thermal runaway characteristic quantity continues to exceed the standard value, i.e. exceeds a second-class warning threshold value, a second-class warning is triggered and a second-class fire operation is made; and
Step 3, continuing to obtain monitoring signal of each detector, on a basis of keeping to trigger the second-class warning, if the battery thermal runaway continues to upgrade, a third-class warning is triggered and a third-class fire operation is made;
wherein, the first-class warning threshold value contains a H₂ concentration warning threshold value and a CO concentration warning threshold value, the second-class warning threshold value contains the H₂ concentration warning threshold value, the CO concentration warning threshold value, and a VOC concentration warning threshold value.
